(19) Europäisches Patentamt
European Patent Office
Office européen des brevets

(11) **EP 2 307 167 B1**

(12) **EUROPÄISCHE PATENTSCHRIFT**

(45) Veröffentlichungstag und Bekanntmachung des Hinweises auf die Patenterteilung:
**23.03.2016 Patentblatt 2016/12**

(51) Int Cl.:
***B23K 11/11*** *(2006.01)*

(21) Anmeldenummer: **09742156.4**

(86) Internationale Anmeldenummer:
**PCT/EP2009/055602**

(22) Anmeldetag: **08.05.2009**

(87) Internationale Veröffentlichungsnummer:
**WO 2009/135938 (12.11.2009 Gazette 2009/46)**

(54) **VERFAHREN UND WERKZEUG ZUR HERSTELLUNG EINER FIXIERVERBINDUNG AN FORMSCHLÜSSIG GEFÜGTEN BAUTEILEN**

METHOD AND TOOL FOR PRODUCING A FIXED CONNECTION TO COMPONENTS JOINED IN A FORM-FITTED MANNER

PROCÉDÉ ET OUTIL POUR PRODUIRE UNE LIAISON DE FIXATION SUR DES ÉLÉMENTS DE CONSTRUCTION ASSEMBLÉS PAR LIAISON DE FORME

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **09.05.2008 DE 102008023037**
**17.09.2008 DE 102008047800**

(43) Veröffentlichungstag der Anmeldung:
**13.04.2011 Patentblatt 2011/15**

(73) Patentinhaber: **FFT Produktionssysteme GmbH & Co. KG**
**36041 Fulda (DE)**

(72) Erfinder: **LATHER, Guido**
**35315 Homberg (DE)**

(74) Vertreter: **Schwabe - Sandmair - Marx Patentanwälte**
**Stuntzstraße 16**
**81677 München (DE)**

(56) Entgegenhaltungen:
**WO-A-2008/148440    JP-A- 1 057 986**
**JP-A- 2004 074 259    KR-A- 20020 049 227**
**US-A- 5 714 730**

**Beschreibung**

Die Erfindung betrifft ein Verfahren und ein Werkzeug zur Herstellung einer stoffschlüssigen Verbindung, durch die wenigstens zwei Bauteile relativ zueinander fixiert werden, die bereits mittels einer Falzverbindung miteinander verbunden sind. Der herzustellende Stoffschluss kann insbesondere eine Widerstandspressschweißverbindung oder punktuelle Klebeverbindung sein. Die Bauteile werden durch den Stoffschluss vorzugsweise im Randbereich relativ zueinander fixiert.

Insbesondere Exterieurbauteile von Fahrzeugen, sog, Anbauteile, wie zum Beispiel Türen und Motorhauben von Automobilen, bestehen meist aus mehreren Blechen, die im Randbereich zumindest abschnittsweise mittels Falzverbindung verbunden sind. Durch die Falzverbindung sollen zum einen aus Verletzungsgründen scharfe Kanten im Randbereich vermieden werden, zum anderen wird durch die Falzverbindung in Kombination mit Verbindungs- und Dichtkleber auch eine steife Struktur des Zusammenbaus erreicht. Zum Fügen eines solchen Zusammenbaus wird üblicherweise ein erstes Bauteil mit Bördelflansch, das später die Außenhaut bilden wird, im Randbereich mit einer Kleberaupe belegt. Dies kann im Falzbett geschehen oder in einem vorgelagerten Arbeitsschritt, Anschließend wird ein zweites Bauteil, das eine innere Verstärkungsstruktur bildet, auf oder in das erste Bauteil gelegt. Dann werden die beiden Bauteile teilweise oder vollständig im Randbereich durch Falzen bzw. Bördeln formschlüssig verbunden, indem der Bördelflansch um den Rand des inneren Bauteils gebördelt wird. Während des Falzens verteilt sich der Kleber vollständig über die Kontaktflächen der Bauteile und füllt die Hohlräume des Flansches aus. Dadurch soll eine höhere Festigkeit der Verbindung und Korrosionschutz gewährleistet werden.

Die Klebeverbindung zwischen den beiden Bauteilen im Randbereich hat direkt nach dem Falzen noch keine Festigkeit. Diese erhält sie erst nach dem Aushärten, das üblicherweise in einem nachgelagerten Ofen geschieht Daher können sich die Bauteile im Rahmen der Formschlussverbindung noch relativ zueinander verschieben, beispielsweise nach oder während der Entnahme aus einem Falzbett oder der Abnahme eines Spannwerkzeugs. Da es sich bei den genannten Zusammenbauten um Sichtbauteile handelt, die die spätere Anmutung des Fahrzeugs maßgeblich bestimmen, werden höchste Anforderungen an die geometrischen Toleranzen und die Oberflächenqualität der Sichtfläche gestellt.

Geometrische Abweichungen sind daher unbedingt zu vermeiden. Eine Vorfixierung des Zusammenbaus kann in einer sog. Gelierstation erfolgen. Hier wird der Kleber thermisch, beispielsweise durch Induktion, geliert. Da beim Gelieren nur eine örtliche Erwärmung im Randbereich der Bauteile erfolgt, kann es zu ungewollten Spannungen innerhalb der Bauteile und Verformungen des Zusammenbaus kommen. Zudem ist dieses Verfahren zeit-, energie- und kostenintensiv, und der gelierte Kleber schafft auch nur bedingt Festigkeit.

In der DE 199 27 208 B4 wird ein Verfahren beschrieben, bei dem Karosseriebleche im Automobilbau im Randbereich nach dem Falzvorgang mittels Buckelschweißverfahren verbunden werden. Dies erfordert jedoch ein Vorbereiten und Prägen der Blechbauteile, um das Buckelschweißen durchführen zu können. Das Hauptmerkmal beim Buckelschweißen ist, dass die Bündelung des Schweißstroms durch die Form des Bauteils, nämlich des Buckels, und nicht durch die Elektrode bestimmt wird. Der durch den Buckel verursachte Abstand muss beim Schweißvorgang durch zusätzlichen Energieeintrag kompensiert werden. Durch den hohen elektrischen und mechanischen Energieeintrag bei diesem Vorgang entstehen bei den Kontaktflächen der Elektrode nicht beabsichtigte Spuren oder Abdrücke des Schweißvorgangs. Zudem können auf der Sichtseite Verformungen sichtbar werden, die nicht akzeptiert werden können. Durch die Fertigungsweise entstehen zusätzliche Kosten für die Vorbereitung und Nachbearbeitung der Bauteile.

In der EP 1 782 908 A1 wird eine Punktschweißklebverbindung beschrieben, die im flächig überlappenden Randbereich der Bleche liegt Es wird eine Klebeverbindung zwischen den beiden Blechen hergestellt, die eine mechanische Formschwelle aufweist. Diese Formschwelle wirkt gegen ein Durchstoßen von Schweißspritzern und gewährt dadurch die Dichtigkeit der Klebeverbindung. Durch diese Formschwelle wird die Geometriefreiheit aber eingeschränkt, so sind beispielsweise gestaltungstechnisch keine flachen Bauteile möglich.

Aus der JP 2004-74259 A ist ein Verfahren und ein Werkzeug zum Verschweißen von Blechen bekannt, wobei die Schweißelektroden an einer gemeinsamen Basis abgestützt werden und die Masseelektrode mit einer Feder mit einer konstanten Federkraft an das Werkstück angedrückt wird.

Die JP 01057986 A beschreibt eine Vorrichtung und ein Verfahren zum Verschweißen von gefalzten Blechflanschen. Dabei wird das Blech in einem Bereich geflanscht und anschließend in diesem Bereich, gehalten durch die Flanschvorrichtung, punktverschweißt.

Die KR 2002-0049227 A betrifft ein Verfahren und eine Vorrichtung, mit der Türen unterschiedlicher Bauweise gefügt werden können. Die Vorrichtung weist einen Industrieroboter auf, der eine Fixiervorrichtung für die Türen trägt, der als Massenelektrode ausgebildet ist. Mit dieser Vorrichtung wird die Fahrzeugtüre in eine Schweißvorrichtung eingelegt und bearbeitet.

Aus der US 5,714,730 B ist ein Verfahren und ein Werkzeug zum Buckelschweißen bekannt, bei dem die Fügeelektrode durch eine Feder in Richtung auf das zu fügende Bauteil vorgespannt ist. In der gespannten Position wird die Elektrode durch eine Sperre gehalten. Zum Schweißen wird die Sperre aufgehoben, so dass die Feder jetzt die Fügeelektrode mit einer einheitlichen vorbestimmten Federkraft auf die Schweißstelle drücken kann.

Die WO 2008/148440 A1 beschreibt eine Vorrichtung und ein Verfahren zum randseitigen Verbinden von Blechen mit zwei Schweißelektroden, die gemeinsam zum Schweißen an die Bleche angestellt werden können. Wenigstens eines der Bleche weist Verprägungen auf, die den zum Schweißen notwendigen Kontakt zwischen den Blechen herstellen. Beim Verschweißen der Bleche kollabiert diese Verprägung, wodurch die beiden Bleche jetzt flächig aufeinander liegen. Ist dies erreicht, wird die Stromzufuhr zu den Fügeelektroden unterbrochen und die Schweißung ist beendet.

Es ist Aufgabe der Erfindung, eine kostengünstige und prozessichere geometrische Fixierung formschlüssig gefügter Bauteile herzustellen.

Diese Aufgabe wird durch ein Verfahren gemäß Anspruch 1 und eine Vorrichtung gemäß Anspruch 11 gelöst. Die abhängigen Ansprüche betreffen Weiterbildungen der Erfindung.

Im Rahmen der Erfindung werden formschlüssig gefügte Bauteile durch Stoffschluss, vorzugsweise durch eine Widerstandspressschweißverbindung oder lokale Klebeverbindung zueinander fixiert, vorzugsweise im Randbereich, in dem auch die formschlüssige Verbindung besteht. Die formschlüssige Verbindung ist eine Falzverbindung. Zusätzlich zur Formschlussverbindung wird wenigstens eine stoffschlüssige, lokal begrenzte, praktisch punktförmige Verbindung erzeugt. Bevorzugt wird an mehreren voneinander beabstandeten Stellen stoffschlüssig gefügt.

Nach der Erfindung haben die Bauteile im Bereich des stoffschlüssigen Fügens vollflächigen Kontakt, sowohl bei als auch schon vor dem stoffschlüssigen Fügen. Die für die Herstellung des Stoffschlusses erforderliche Energie wird nicht über eine erhabene Abragung eines der zu fügenden Bauteile geleitet und dadurch in der Fügestelle konzentriert, sondern über den im Fügebereich vollflächigen Bauteilkontakt. Der Kontakt kann unmittelbar zwischen den Bauteilen bestehen, optional kann zwischen den Bauteilen im Fugebereich eine dünne Schicht eines Klebers vorhanden sein. Gemäß der Erfindung wird der lokale Stoffschluss dort hergestellt wo der Formschluss besteht Es muss für die Fixierung keine Abragung geformt werden, die für den Formschluss an sich nicht benötigt wird oder diesen sogar schwächt. Die Herstellung der Kombination aus formschlüssiger und stoffschlüssiger Verbindung wird vereinfacht und zeitlich verkürzt. Die Aufstandsfläche der Fügeelektrode und der Energieeintrag sind auf den vollflächigen Kontakt abgestimmt, so dass einerseits die ausreichend feste Fixierung geschaffen, andererseits aber die Sichtfläche des in erfindungsgemäßer Weise in sich fixierten Bauteilverbunds nicht beeinträchtigt wird.

Für das stoffschlüssige Fügen ist das Widerstandspressschweißen besonders geeignet. Die Fügeelektrode ist in solch einem Verfahren die Schweißelektrode. Bevorzugte Bereiche für ausgesuchte Schweißparameter solch eines Punktschweißverfahrens sind:

$$A < 20\ mm^2, \text{bevorzugt: } 1 \leq A \leq 13\ mm$$

$$5 \leq P \leq 150\ N/mm^2$$

wobei A die Aufstandsfläche bezeichnet, mit der die Fügeelektrode beim Fügen Kontakt mit dem ersten Bauteil hat, und P der Kontaktdruck ist, mit dem die Fügeelektrode während des Fügens mit ihrer Aufstandsfläche A gegen das erste Bauteil drückt.

Punktschweißen wird zur Verbindung von Aluminium- oder Stahlblechen in der Automobilindustrie sowie im Karosserie- und Fahrzeugbau und allgemein in der blechverarbeitenden Fertigung angewendet Der große Vorteil dieser Schweißtechnik besteht darin, dass auf einfache Weise Energie in Form von elektrischem Strom auf eine kleine Fläche eines Werkstücks konzentriert werden kann, wobei unter Ausübung mechanischen Drucks eine unlösbare stoffschlüssige Verbindung entsteht

Ausschlaggebend für die Haltbarkeit und die Größe des Schweißpunktes sind die in der Schweißsteuerung eingegebenen Schweißparameter, die von der Art und Dicke der zu verschweißenden Bauteile, deren Anzahl, deren Passung zueinander sowie deren Oberflächengüte abhängig sind. Eine Rolle spielt auch die Kühlung der Schweißelektrode, die Temperatur des Kühlwassers und dessen Durchflussmenge. Beim standardmäßigen Zangenpunktschweißen werden handelsübliche Elektrodenkappen verwendet, deren Aufstandsfläche ca. 6 mm im Durchmesser beträgt, um einen ausreichend großen Stoffschluss zwischen den Bauteilen herzustellen. Hierbei wird üblicherweise eine Punktschweißzange an die Bauteile herangeführt und geschlossen. Beim Verschweißen entstehen Abdrücke und Ausglühungen auf der Oberfläche, die im Sichtbereich von Bauteilen nicht erwünscht und eine Nachbearbeitung erfordern.

Eine besondere Variante des Widerstandspunktschweißens ist das Stoßpunkten. Im Gegensatz zur Zangenausführung werden beim Stoßpunkten beide Elektroden aus der gleichen Richtung auf die Bauteile bewegt, beispielsweise auf einen überlappenden Bauteilflansch. Auf der gegenüberliegenden Seite des Bauteilverbunds nimmt ein Widerlager, entweder eine die Bauteile aufnehmende stationäre oder beim Fügen im Ganzen mit den Bauteilen im Raum bewegte Bauteilaufnahme oder ein nur lokales Widerlager die zum Schweißen erforderliche Anpresskraft des Werkzeugs auf. Die Elektroden wirken in die gleiche Wirkrichtung auf die Bauteile. Im Sinne der Erfindung bedeutet "in die gleiche Wirkrichtung wirken" oder "in Wirkrichtung beweglich", dass die Elektroden auf die gleiche Seite des Bauteilverbunds wirken oder in Richtung auf die betreffende Seite zu oder von ihr weg beweglich sind. Hierbei können die Elektroden durchaus zueinander geneigt sein oder in zueinander geneigte Richtungen beweglich sein, solange sie nur gleichzeitig bei dem Fügen auf die gleiche Seite des Verbunds wirken. Bevorzugt weisen die Elektroden aber parallel zueinander und sind längs parallelen Achsen beweglich gelagert.

Das erfindungsgemäße Verfahren ist solch ein Stoßpunkten. Das Werkzeug ist oder umfasst entsprechend ein(en) Stoßpunkter. Allerdings ist die Erfindung nicht auf das Schweißen beschränkt. Vielmehr setzt sie das an sich für das Schweißen bekannte Stoßpunkten in einer Abwandlung zum lokalen Härten eines Klebers ein. Der Kleber kann insbesondere im Bereich der formschlüssigen Verbindung zu deren Abdichtung oder Festigung ein- oder aufgebracht sein. Soweit die Erfindung nur unter Bezugnahme auf Schweißen erläutert wird, gelten die jeweiligen Ausführungen auch für das lokale Härten eines Klebers.

Die bisher beschriebenen Verfahrensvarianten können nur eine örtliche Punktschweißung durchführen. Das Widerstandsrollennahtschweißen oder ein Rollnahtschweißen mit anderer Art des Energieeintrags ermöglicht ein Schweißen in einem kontinuierlichen Lauf entlang eines überlappenden Flansches mit einem entweder kontinuierlichen Schweißen in ständigem Kontakt oder ein intermittierendes Schweißen, bei dem die Fügeoder die Masseelektrode abwechselnd in und aus dem Kontakt mit den Bauteilen gebracht werden. Das Wort "oder" hat im Sinne der Erfindung stets die Bedeutung eines "inklusiv oder", umfasst also sowohl die Beutung von "entweder ... oder" als auch die Bedeutung von "und", soweit der jeweils konkrete Zusammenhang nicht ausschließlich nur eine einzige der Bedeutungen zulässt. Im vorstehenden Zusammenhang beispielsweise bedeutet dies, dass entweder nur die Fügeelektrode oder nur die Masseelektrode im Wechsel oder beide Elektroden jeweils gleichzeitig in und aus dem Kontakt gebracht wird oder werden.

Wird wenigstens die Fügeelektrode als Drehkörper, vorzugsweise Rollelektrode, ausgeführt, kann im Gegensatz zu den vorher beschriebenen Schweißmethoden auch während des Schweißvorganges eine Bewegung zwischen den zu fügenden Bauteilen und der Fügerollelektrode stattfinden. Optional kann auch die Masseelektrode als Rollelektrode ausgeführt sein. In noch einer Variante ist nur die Masseelektrode eine Rollelektrode. Dies bedingt allerdings einen Bewegungsstopp zum stoffschlüssigen Fügen, der aufgrund des ständig geltenden Kontakts aber kürzer ausfallen kann als bei einem Abheben beider Elektroden. Falls nur eine der Elektroden eine Rollelektrode ist, kann diese ständig in Rollkontakt mit dem zugeordneten Bauteil verbleiben, während die andere Elektrode bevorzugt von dem ihr zugeordneten Bauteil abhebt und nur zum Fügen zugestellt wird.

Durch das erfindungsgemäße Fixierverfahren sollen keine Beeinträchtigungen des Bauteilverbunds im Sichtbereich entstehen, insbesondere sollen keine Druckstellen oder Ausglühungen durch das Fixierverfahren entstehen. Dies wird wie bereits erläutert dadurch verhindert, dass die Fügeelektrode im Kontaktbereich der beiden Bauteile auf den Bördelflansch des die Sichtfläche bildenden äußeren Bauteils und die Masseelektrode auf das innere Bauteil angesetzt wird. Als Fügeelektrode wird vorzugsweise eine Elektrodenkappe mit geringer Energiewirkfläche, sog. Aufstandsfläche A, verwendet. In bevorzugter Ausführung ist die Aufstandsfläche A kleiner als 20 mm$^2$, vorzugsweise liegt sie im Bereich von 1 bis 13 mm$^2$ und noch bevorzugter zwischen 1 und 5 mm$^2$. Der Kontakt der Masseelektrode dient dazu, den Stromkreis zu schließen. Vorzugsweise ist der Massekontakt nachgiebig, besonders bevorzugt elastisch nachgiebig. Er kann insbesondere als metallisches Gewebeband oder Bürste oder anderweitig aus elektrisch leitfähigem Material mit flexiblen Eigenschaften gebildet sein. Der in sich nachgiebige Kontakt ist vorzugsweise an einem in sich festen, nicht nachgiebigen Basisteil der Masseelektrode befestigt. Die Nachgiebigkeit ist derart, dass sich der Massekontakt an Ungleichmäßigkeiten, die das zu kontaktierende Bauteil aufweisen kann, anpasst und dadurch einen über die Aufstandsfläche gleichmäßig guten Kontakt gewährleistet, also die Soll-Aufstandsfläche auch tatsächlich verwirklicht wird.

Durch den Energieeintrag im Kontaktbereich vom äußeren Bauteil zum inneren Bauteil entsteht die stoffschlüssige Verbindung. Hierbei sind keine bauteilseitigen Vorbereitungen notwendig, wie beispielsweise ein erhabener Schweißbuckel beim Buckelschweißen.

Die Anzahl und Position der gesetzten stoffschlüssigen Verbindungen bzw. Fixierpunkte ist abhängig von der notwendigen Verformungssteifigkeit im Herstellungsprozess des Zusammenbaus. Eine bevorzugte, obgleich nur optionale Klebeverbindung härtet vorzugsweise erst in einem späteren Prozessschritt aus, so dass insbesondere zur weiteren Handhabung des Zusammenbaus eine Fixierung der Bauteile notwendig ist. Durch die Fixierpunkte kann eine erhöhte geometrische Qualität gewährleistet und eine Minimierung der Toleranzabweichung erreicht werden. Die damit erreichbare Maßhaltigkeit der Bauteile ermöglicht ein exakteres und störungsfreieres Verbauen im nachgelagerten Fertigungsprozess.

Des Weiteren wird durch den definierten minimalen Energieeintrag durch das Widerstandspressschweißen das Widerlager, vorzugsweise ein Falzbett oder ein nur lokales Widerlager, nicht beeinträchtigt Somit kann das erfindungsgemäße Verfahren unmittelbar nach oder bevorzugt während des Falzvorgangs durchgeführt werden. Eine Entnahme des Zusammenbaus nach dem Falzvorgang oder eine anschließend erneute Ausrichtung der Bauteile in einer weiteren Vorrichtung zur nachträglichen Fixierung und Ausrichtung der Sollposition kann entfallen.

Um den Stoffschluss in der für die Fixierung erforderlichen Festigkeit, aber dennoch schonend ohne Deformation der von der Masseelektrode abgewandten Fläche des ersten Bauteils, die nach Montage des Bauteilverbunds dessen Sichtfläche bildet, herzustellen, ist folgende Vorgehensweise vorgesehen. Die Fügelektrode wird an der jeweiligen Fügestelle mit ihrer Aufstandsfläche mit einem niedrigen, ersten Kontaktdruck gegen den Bördelflansch gedrückt. Dieser anfängliche, erste Kontaktdruck wird im weiter aufrecht erhaltenen Kontakt mit dem Bördelflansch bis auf einen für das Fügen günstigen Fügedruck erhöht, bei dem dann die Energie in die Fügestelle eingetragen wird. Der anfängliche, erste Kontaktdruck ist deutlich geringer als der Fügedruck. Er beträgt vorzugsweise weniger als die Hälfte des Fügedrucks. Der anfänglich niedrige Kontaktdruck kann kontinuierlich oder in Stufen bis auf den Fügedruck erhöht werden, bevorzugt wird er in nur einer Stufe erhöht.

Die Masseelektrode wird mit dem zweiten Bauteil in Kontakt gebracht und mit einem zweiten Kontaktdruck gegen das zweite Bauteil gedrückt. Der zweite Kontaktdruck kann von Beginn an so groß sein, wie es für das Fügen zwecks sicherer Kontaktierung mit möglichst geringem, über den Kontakt gemessenen Widerstand erforderlich ist. Der Kontaktdruck der Masseelektrode kann alternativ aber ebenfalls anfänglich geringer sein und nach sicherer Etablierung des Kontakts erst für das Fügen erhöht werden.

Die Fügeelektrode und die Masseelektrode können im gleichen Zeitpunkt mit dem jeweils zugeordneten Bauteil, die Fügeelektrode mit dem ersten und die Masseelektrode mit dem zweiten Bauteil, in Kontakt gebracht werden. Bevorzugter werden sie jedoch nacheinander in den jeweiligen Kontakt gebracht In einer ersten Variante wird zuerst die Fügeelektrode und in einer zweiten Variante zuerst die Masseelektrode in den Kontakt gebracht

In der ersten Variante wird die Fügeelektrode mit ihrer Aufstandsfläche der Fügestelle des Bördelflansches in einem geringen lichten Abstand von vorzugsweise nur wenigen Millimetern oder auch weniger als 1 Millimeter gegenüberliegend positioniert. Ist das Werkzeug an einem beweglichen Aktor angeordnet, erfolgt die Positionierung der Elektrode relativ zu den Bauteilen durch entprechendes Bewegen des Werkzeugs im Raum. Bei stationär angeordnetem Werkzeug und stattdessen im Raum mit den Bauteilen beweglicher Spanneinrichtung wird diese mit den relativ zueinander gespannten Bauteilen im Raum in die Position bewegt. Ist besagte Position erreicht, wird die Fügeelektrode gegen den Bördelflansch bewegt und mit dem ersten Kontaktdruck gegen die Fügestelle gedrückt. Anschließend wird die bislang noch kontaktlose Masseelektrode mit dem zweiten Kontaktdruck, der vorzugsweise größer ist als der erste Kontaktdruck der Fügeelektrode, gegen das zweite Bauteil gedrückt. Ist dieser Zustand hergestellt, wird der Kontaktdruck der Fügeelektrode auf den Fügedruck erhöht, und die Bauteile werden durch Energieeintrag und die dadurch bewirkte Erwärmung gefügt.

In der zweiten Variante wird die Masseelektrode der vorgegebenen Kontaktstelle des zweiten Bauteils in einem geringen lichten Abstand von vorzugsweise nur wenigen Millimetern oder auch weniger als 1 Millimeter gegenüberliegend positioniert. Ist das Werkzeug an einem beweglichen Aktor angeordnet, erfolgt die Positionierung der Elektrode relativ zu den Bauteilen durch entprechendes Bewegen des Werkzeugs im Raum. Bei stationär angeordnetem Werkzeug und stattdessen im Raum mit den Bauteilen beweglicher Spanneinrichtung wird diese mit den relativ zueinander gespannten Bauteilen im Raum in die Position bewegt. Ist besagte Position erreicht, wird die Masseelektrode mit dem zweiten Kontaktdruck gegen das zweite Bauteil gedrückt. Anschließend wird die bislang noch kontaktlose Fügeelektrode mit der ersten Kontaktkraft, die vorzugsweise kleiner ist als die Kontaktkraft der Masseelektrode, gegen den Bördelflansch gedrückt. Ist dieser Zustand hergestellt, wird die Kontaktkraft der Fügeelektrode auf den Fügedruck erhöht, und die Bauteile werden durch Energieeintrag und die dadurch bewirkte Erwärmung gefügt.

Die Fügeelektrode und die Masseelektrode sind in bevorzugten Ausführungen an einer gemeinsamen Basis relativ zueinander in Wirkrichtung beweglich abgestützt. Die Basis kann stationär oder an einem im Raum beweglichen Aktor angeordnet oder für eine Anbringung an einem im Raum beweglichen Aktor eingerichtet sein, vorzugsweise durch automatisches Andocken. Im letzteren Fall sind die Basis und die Elektroden als Einheit an- und abdockbar.

Die Erfindung betrifft wie bereits erwähnt nicht nur das Fixieren formschlüssig bereits miteinander verbundener Bauteile durch Schweißen, sondern auch durch lokales Aushärten eines vorzugsweise im Fügebereich befindlichen Klebers. Das Verfahren und die Vorrichtung eignen sich auch für solch ein Fixieren. In dieser Modifikation ist die Erfindung insbesondere für Bauteile aus Leichtmetall, beispielsweise Aluminiumlegierungen, von Vorteil, die oft nur mit Problemen verschweißt werden können. Ferner eignet sie sich zum Fixieren nicht miteinander verschweißbarer Bauteile, beispielsweise eines Blechbauteils und eines Kunststoffbauteils. Die Bauteile sind zuvor wieder durch Falzen verbunden worden. Insoweit unterscheidet sich das lokale Härten nicht vom Punktschweißen. Der in der Falztasche befindliche Kleber fixiert die Bauteile im gelierten Zustand nur unzureichend, das Gelieren nimmt überdies geraume Zeit in Anspruch. Die Klebeverbindung muss zum Erhalt der geforderten Festigkeit in einem Ofen ausgehärtet werden. Die bis dahin erforderliche Handhabung gestaltet sich aufwändig. Indem der Kleber vor dem Aushärten in einem Ofen lokal an ausgesuchten Fügestellen durch Stoßpunkten gehärtet wird, werden diese Probleme gelöst. Es müssen lediglich die Fügeparameter dem Härten des Klebers gemäß angepasst werden. So werden die Dichte des Energieflusses und der Fügedruck zweckmäßigerweise niedriger eingestellt als für das Schweißen. Die Aufstandsfläche ist vorzugsweise größer. Die Anmelderin behält es sich vor, auf das lokale Härten eines Kle-

bers durch Stoßpunkten eine eigene Anmeldung zu richten, die nicht auf den vollflächigen Kontakt der Bauteile im Fügebereich beschränkt ist, obgleich dies auch für die Klebevariante bevorzugt wird.

Vorteilhafte Merkmale werden auch in den Unteransprüchen und deren Kombinationen beschrieben.

Ausführungsbeispiele der Erfindungen werden im Folgenden an Hand von Figuren beschrieben. An den Ausführungsbeispielen offenbar werdende Merkmale bilden je einzeln und in jeder Merkmalskombination die Gegenstände der Ansprüche und auch die vorstehend erläuterten Ausgestaltungen vorteilhaft weiter. Es zeigen:

Fig. 1     eine Fügeelektrode und eine Masseelektrode eines ersten Ausführungsbeispiels bei einem Fügen;

Fig. 2     die Fügeelektrode der Figur 1 in vergrößerter Darstellung;

Fig. 3     ein die Fügeelektrode und die Masseelektrode des ersten Ausführungsbeispiels umfassendes Bearbeitungswerkzeug;

Fig. 4     eine Fügeelektrode und eine Masseelektrode eines zweiten Ausführungsbeispiels bei einem Fügen;

Fig. 5     ein Bearbeitungswerkzeug eines zweiten Ausführungsbeispiels mit einer Fügeelektrode und einer Masseelektrode in einer Variante;

Fig. 6     das Werkzeug des ersten Ausführungsbeispiels in Position unmittelbar vor dem Fügen nach einer ersten Verfahrensvariante;

Fig. 7-9     die erste Verfahrensvariante in einer Sequenz von nacheinander ausgeführten Schritten;

Fig. 10-12     eine zweite Verfahrensvariante in einer Sequenz von nacheinander ausgeführten Schritten;

Fig. 13     ein Bearbeitungswerkzeug eines dritten Ausführungsbeispiels;

Fig. 14     das Bearbeitungswerkzeug des dritten Ausführungsbeispiels mit einem an der Führungsbahn geführten Widerlager.

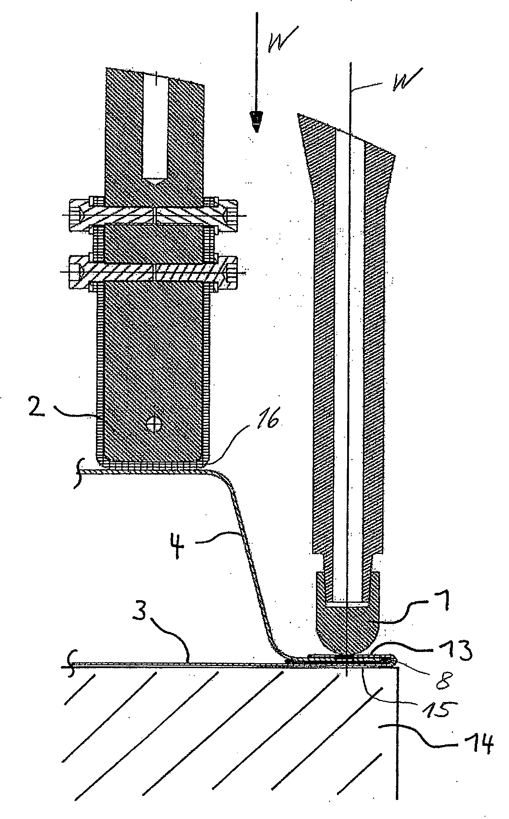

Fig. 1 zeigt einen Fügebereich zweier Bauteile 3 und 4, die mittels eines Bearbeitungswerkzeugs eines ersten Ausführungsbeispiels thermisch stoffschlüssig gefügt werden. Ein formschlüssig gefügter, beispielhaft gefalzter Zusammenbau 3, 4 von Bauteilen 3 und 4 liegt mit einer Sichtfläche 15 auf einer ein Widerlager bildenden Auflage 14, beispielsweise einem Falzbett.

Zum formschlüssigen Fügen eines solchen Zusammenbaus 3, 4 wird ein erstes Bauteil 3 mit einem Bördelflansch 13, das später die Außenhaut bilden wird, im Randbereich, längs des Bördelflansches 13, mit Kleber 8 belegt, zweckmäßigerweise in Form einer Kleberaupe. Dies kann im Falzbett geschehen oder in einem vorgelagerten Arbeitsschritt. Anschließend wird ein zweites Bauteil 4, das eine innere Verstärkungsstruktur bildet, auf oder in das erste Bauteil 3 gelegt. Dann werden die beiden Bauteile teilweise oder vollständig im Randbereich durch Falzen formschlüssig verbunden, indem der Bördelflansch 13 um den Rand des zweiten Bauteils 4 gefalzt wird. Während des Falzens verteilt sich der Kleber 8 vollständig über die Kontaktflächen der Bauteile 3 und 4 und füllt die Hohlräume der Falztasche aus. Durch den Kleber 8 wird die Festigkeit der Verbindung erhöht und ein Korrosionsschutz geschaffen.

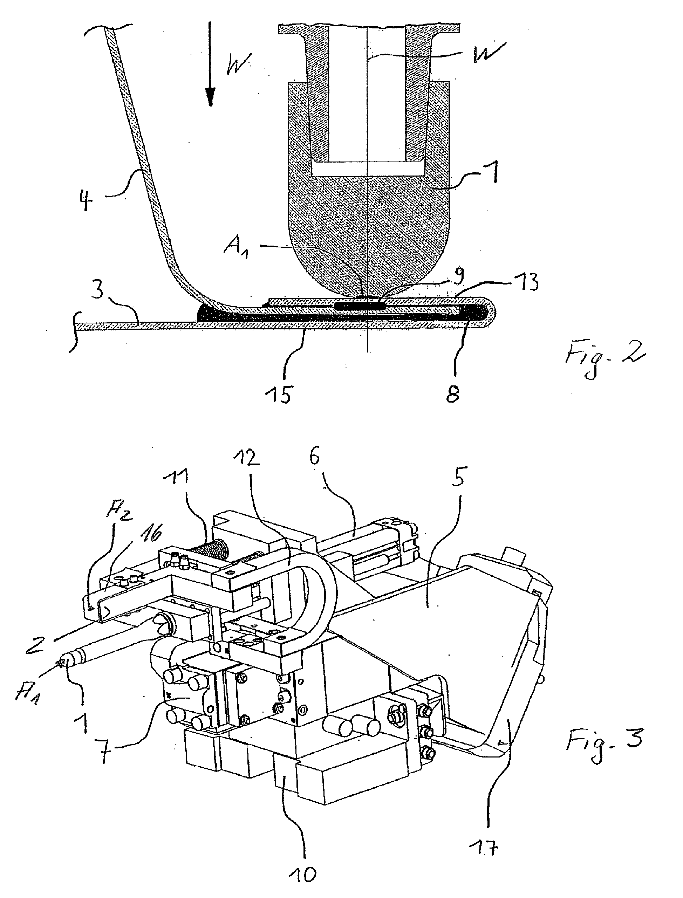

Mittels eines im Raum beweglichen Aktors, vorzugsweise eines Industrieroboters, wird das Bearbeitungswerkzeug, das eine Fügeelektrode 1 und eine Masseelektrode 2 umfasst, über dem Bördelflansch 13 positioniert. Der Bördelflansch 13 wird in Wirkrichtung W angefahren, bis das Werkzeug relativ zum Bördelflansch 13 eine vorprogrammierte Position erreicht hat. In dieser hat die Masseelektrode 2 mit einer vordefinierten Kraft Kontakt mit dem inneren Bauteil 4. Diese Kraft kann durch einen Kraftspeicher 11 (Figur 3), beispielsweise ein Federpaket, sichergestellt werden, welches zwischen Roboter und Masseelektrode 2, vorzugsweise zwischen Aktor und Masseelektrode 2, angeordnet ist. Alternativ ist auch die Anordnung einer Kraftmessdose mit Regelkreis zur Robotersteuerung denkbar, die den Roboter in Wirkrichtung W solange verfahren lässt, bis die SollKraft erreicht ist. Entsprechend der in Wirkrichtung W gemessenen Niveaudifferenz zwischen der Kontaktstelle der Masseelektrode 2 und der Kontaktstelle der Fügeelektrode 1 wird die Fügeelektrode 1 mittels einer Servoeinheit 6 (Fig. 3) bis in den Kontakt mit dem Bördelflansch 13 verfahren. Dies kann mittels eines Weg gesteuerten Servoantriebs geschehen. Sobald die angesteuerte Position erreicht ist, drückt die Fügeelektrode 1 Kraft oder Druck gesteuert in Wirkrichtung W auf den Bördelflansch 13. Die Elektroden 1 und 2 sind somit relativ zueinander in Richtung W verschiebbar. In der nun erreichten Arbeitsposition wird der stoffschlüssige Fügevorgang durchgeführt. Die elektrische Energie wird über einen Mittelfrequenztransformator 7 (Fig. 3) bereitgestellt und über ein flexibles Lamellenband 12, das am Werkzeug die Elektroden 1 und 2 elektrisch miteinander verbindet, in den Fügebereich des Zusammenbaus 3, 4 eingetragen und konzentriert sich insbesondere an der Fügestelle im Kontakt des Bördelflansches 13 mit der Fügeelektrode 1 und dem in die Falztasche ragenden Rand des Bauteils 4.

Fig. 2 zeigt im Schnitt nur den Bereich des Bördelflansches 13 während des Fügeprozesses mit dem Werkzeug des ersten Ausführungsbeispiels. Im Bauteilschnitt ist der Bördelflanseh 13 des äußeren Bauteils 3 bereits um das innere Bauteil 4 gefalzt. Der Zusammenbau 3, 4 liegt mit der späteren Sichtfläche 15 auf der Auflage 14 der Spannvorrichtung. Zwischen den beiden Bauteilen 3 und 4 befindet sich im Fügebereich der Kleber 8 im noch nicht ausgehärteten Zustand. Mit W ist eine in Wirkrichtung W erstreckte, also zur Wirkrichtung W parallele Wirkachse der Fügeelektrode 1 bezeichnet, längs der die Fügeelektrode 1 auch relativ zu einer Basis des Werkzeugs beweglich ist.

Die Kontaktstelle zwischen Fügeelektrode 1 und Bördelflansch 13 bildet die Aufstandsfläche $A_1$ der Elektrode 1. Während des Fügeprozesses fließt der Strom von der Fügeelektrode 1 über den Bördelflansch 13 in das innere Bauteil 4 und im Bauteil 4 zum Kontakt 16 der Masseelektrode 2. Dabei bildet sich im vollflächigen Kontakt zwischen dem Bördelflansch 13 und dem inneren Bauteil 4 eine lokale, praktisch punktförmige stoffschlüssige Verbindung 9.

Handelt es sich bei dem stoffschlüssigen Fügen wie im Ausführungsbeispiel um einen Schweißprozess, vorzugsweise ein Widerstandspressschweißen, verbinden sich die Werkstoffe der Bauteile 3 und 4 unmittelbar. Die Verbindung 9 hat vorzugsweise die Form einer Schweißlinse.

Das freie Ende der Fügeelektrode 1, mit dem die Fügeelektrode 1 den Bördelflansch 13 kontaktiert, ist in sich unnachgiebig, um die Aufstandsfläche $A_1$ geometrisch definiert vorzugeben. Die Masseelektrode 2 ist an ihrem freien Ende hingegen in sich elastisch nachgiebig, um sich Unebenheiten im Bereich der jeweiligen Kontaktstelle des Bauteils 4 anpassen zu können und dadurch einen vollflächigen, widerstandsarmen Kontakt zu gewährleisten. Die elastische Nachgiebigkeit wird mittels eines montierten Massekontakts 16 in Form eines Metallgewebebands geschaffen. Die aufgrund der Nachgiebigkeit nur innerhalb gewisser Grenzen vorgegebene Soll-Aufstandsfläche der Masseelektrode 2 ist in Figur 3 mit $A_2$ bezeichnet.

Fig. 3 zeigt in isometrischer Darstellung ein bevorzugtes Beispiel für das Bearbeitungswerkzeug des ersten Ausführungsbeispiels für die Herstellung der punktuellen Widerstandspressschweißverbindung 9. In einer ersten Ausführungsform wird das Bearbeitungswerkzeug über einen Aktor, beispielsweise einen Industrieroboter oder eine stationäre Schwenkeinheit, in die Arbeitsposition gebracht. In der gezeigten Ausführungsform ist eine Roboterflanschplatte 17 für die Anbindung an einen Roboterarm eines Industrieroboters vorgesehen. Die Flanschplatte 17 kann vorteilhafterweise zu einer Schnellwechselkupplung für ein automatisches An- und Abdocken an den Roboterarm weiterentwickelt sein.

Dieser Roboter kann innerhalb einer Bearbeitungszelle einem Falzwerkzeug nachgelagert positioniert sein. Er kann nach dem Falzprozess am noch gespannten Zusammenbau 3, 4 die vorgesehene Anzahl an Fixierpunkten setzen. Der erfindungsgemäße Fixierprozess kann alternativ aber auch nachgelagert in einem separaten Spannwerkzeug geschehen. Allerdings wäre Voraussetzung, dass sowohl dass innere Bauteil 3 als auch das äußere Bauteil 4 durch Aufnahmetechnik positioniert werden, so dass evtl. Verschiebungen, die bei der Entnahme aus dem Falzbett stattgefunden haben, wieder korrigiert werden.

Im Bereich der Umformtechnik sind verschiedene Rollfalzsysteme bekannt. Im Rollfalzvorgang wird die Bördelkante schrittweise umgeformt, hierbei wird der vorher definierte Falzbereich von einer Rollfalzanordnung abgefahren, wobei die Rollfalzanordnung vorzugsweise an einem Industrieroboter angeordnet ist. Das Rollfalzwerkzeug und das erfindungsgemäße Fügewerkzeug können als Wechselwerkzeug ausgeführt sein, so dass der Roboter nach dem Falzen das Rollfalzwerkzeug an eine Wechselstation bzw. Dockingstation übergibt und aus einer anderen Wechselstation das erfindungsgemäße Bearbeitungswerkzeug aufnimmt, um die Fixierpunkte zu setzen.

In einer ersten Variante einer zweiten Ausführung ist das Schweißwerkzeug als Bearbeitungswerkzeug zusammen mit dem Rollfalzwerkzeug am Roboterarm angeordnet. Dadurch entfallen notwendige Wechselstationen und Dockingeinrichtungen am Roboter. Der Industrieroboter muss nach oder während des Falzprozesses nur umorientieren, um die Fixierpunkte zu setzen.

Noch vorteilhafter ist eine Anordnung des Fügewerkzeugs in der gleichen Wirkrichtung W wie das Rollfalzwerkzeug nach einer zweiten Variante, so dass der Roboter jeweils an der für das Fixieren vorgesehenen Position den Falzprozess unterbrechen und die Fügeelektrode 1 und die Masseelektrode 2 in Wirkrichtung in Kontakt mit dem Bördelflansch 13 und benachbart dem Bauteil 4 bringen kann. Nach der Fixierung, vorzugsweise Schweißung, werden die Elektroden 1 und 2 wieder zurückgefahren und der Rollfalzprozess fortgeführt. Dadurch ist es möglich, den Fixierprozess, vorzugsweise mittels Widerstandspressschweißen, in den Rollfalzprozess zu integrieren und dabei nur wenig Prozesszeit zu verlieren.

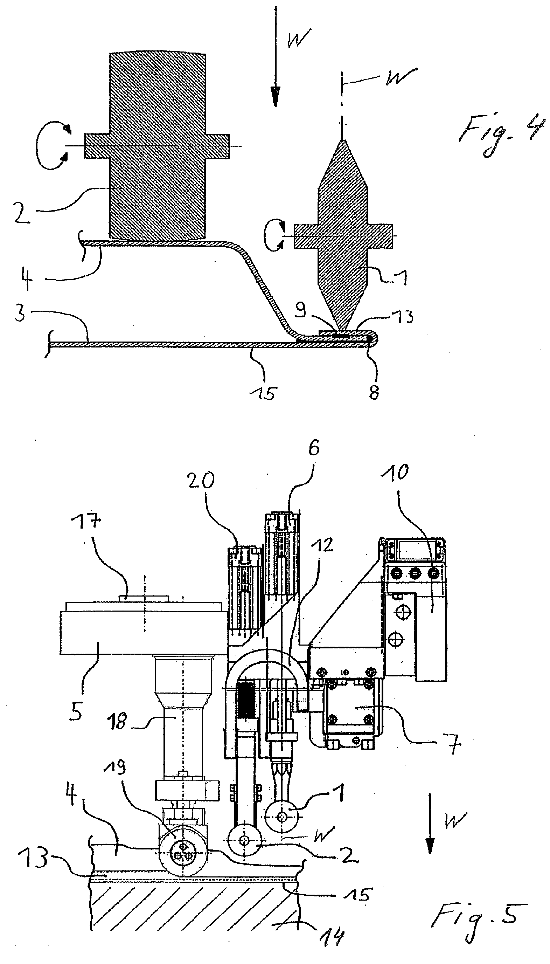

Fig. 4 zeigt eine dritte Variante der zweiten Ausführung, jetzt mit einer als Rollelektrode ausgeführten Fügeelektrode 1. Die Fügeelektrode 1 ist auch gleichzeitig die Fügerolle des Rollfalzwerkzeugs. Rollfalzwerkzeug und Thermofügewerkzeug sind zu einem einzigen Bearbeitungswerkzeug verschmolzen. Damit der Bewegungsablauf des Rollfalzvorgangs nicht unterbrochen werden muss, um die Fixierverbindungen zu erzeugen, kann insbesondere eine kontinuierliche oder sequentielle Fügeweise mittels Rollnahtschweißen verwirklicht sein. Die Fügeelektrode 1 ist vorzugsweise in Form einer konisch zum axialen Randbereich verjüngt verlaufende Rolle verwirklicht. Dadurch wird der Wirkbereich der Elektrode 1 konzentriert. In alternativen Ausführungen kann die Rolle an der Kontaktfläche auch eine Profilierung haben, beispielsweise einen um die Drehachse der Elektrode 1 laufenden, im Längsschnitt runden oder eckigen Wulst oder mehrere derartige Abragungen. Die Masseelektrode 2 wird bei dieser Fertigungsweise vorzugsweise ebenfalls als Rollglied ausgeführt, wobei diese vorzugsweise leicht ballig ist. Auch hier ist denkbar, einen elastisch oder gegebenenfalls plastisch nachgiebigen und dadurch flexibel anpassbaren Kontakt, vergleichbar dem Kontakt 16 des ersten Ausführungsbeispiels, zu wählen, beispielsweise einen Überzug aus Metallgewebe. Alternativ kann der Massekontakt ein Gleitglied sein, insbesondere in Bürsten- oder Gewebeform ausgeführt werden, das über das Bauteil 4 gleitet.

Fig. 5 zeigt ein Bearbeitungswerkzeug entsprechend der zweiten Ausführung in einer vierten Variante, in der ein Falzwerkzeug 18 und ein hiervon separates Thermofügewerkzeug zu einem kombinierten Bearbeitungswerkzeug zusammengefasst und als Einheit austauschbar am Aktor angedockt sind. Die vierte Variante steht zwischen der zweiten und der dritten Variante. Mit der vierten Variante besteht die Möglichkeit, den stoffschlüssigen Fügeprozess dem Rollfalzprozess unmittelbar nachgelagert auszuführen, ohne den Rollfalzprozess zu unterbrechen. Da bei der Rollfalz-Thermofüge-Anordnung der Art nach unterschiedliche, aufeinander folgende Prozessschritte in einem Lauf des Werkzeugs zusammengefasst werden, wird eine hohe Bauteilgenauigkeit und ein erheblich optimierter Fertigungsprozess erreicht. Es ist nahezu keine zusätzliche Prozesszeit notwendig. Andererseits kann für jeden der Prozesse das Werkzeug optimal gestaltet werden, frei von etwaigen Restriktionen, die ihm in der dritten Variante von der jeweils anderen Werkzeugfunktion auferlegt sein können.

Das Rollfalzwerkzeug 18 ist zusammen mit dem Thermofügewerkzeug in einem Kombinationswerkzeug integriert. Über die Roboteranschlussplatte 17 ist das Kombinationswerkzeug mit einem Industrieroboter verbunden. Im letzten Rollfalzschritt schließt die Falzrolle 19 den Bördelflansch 13, so dass dieser vollflächig auf dem inneren Bauteil 4 aufliegt. An vorgesehenen Stellen im Falzprozess werden die Fügeelektrode 1 und die Masseelektrode 2 über die Servoeinheiten 6 und 20 entsprechend Fig. 4 in Kontakt mit den Bauteilen 3 und 4 gebracht. Während des kontinuierlichen Falzprozesses werden punktuelle oder kurze linienförmige stoffschlüssige Verbindungen 9 (Fig. 2) hergestellt. Nach dem Erzeugen des jeweiligen Fixierpunktes oder Fixierlinienabschnitts können die Elektroden 1 und 2 mittels der jeweils zugeordneten Servoeinheit 6 oder 20 vom Bördelflansch 13 bzw. dem Bauteil 2 zurückgefahren werden, um etwaige geometrische Hindernisse des Zusammenbaus zu überbrücken.

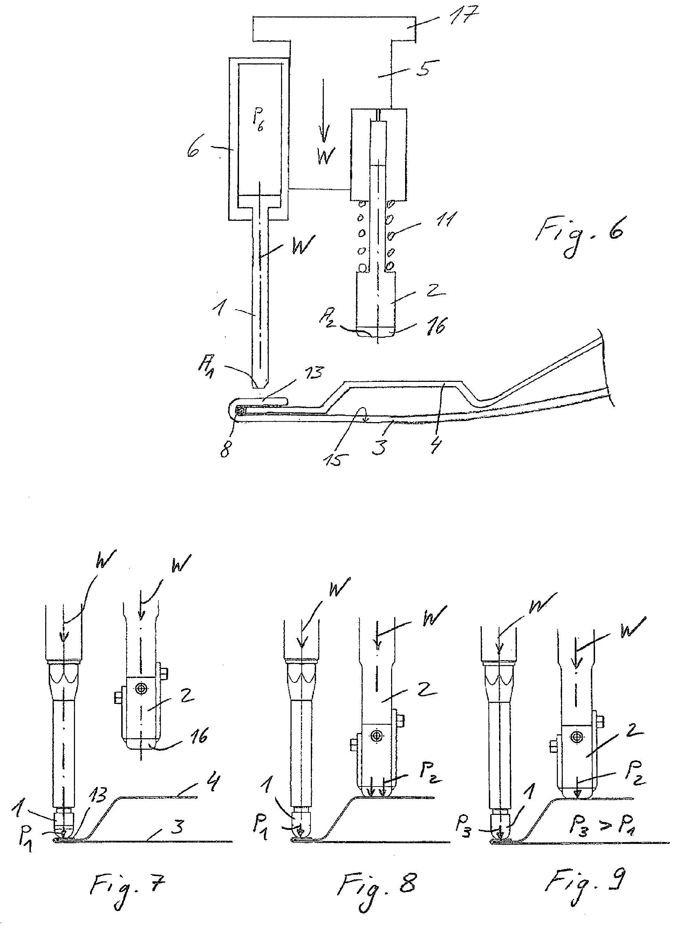

Figur 6 zeigt ein Thermofügewerkzeug mit der Fügeelektrode 1 und der Masseelektrode 2 in Position unmittelbar vor dem stoffschlüssigen Fügen an einer der mehreren längs des Bördelflansches 13 vorgegebenen Fügestellen. Der Aktor hat das Werkzeug relativ zu dem Zusammenbau 3, 4 positioniert, so dass die Fügeelektrode 1 mit ihrer Aufstandsfläche A dem Bördelflansch 13 an der Fügestelle in Wirkrichtung W in einem kurzen Abstand gegenübersteht. Der Aktor fährt diese Position an. Die Masseelektrode 2 hat ebenfalls noch keinen Kontakt mit dem ihr zugeordneten Bauteil 4. Aus diesem positionierten Zustand wird von einer Steuerung, vorzugsweise der Aktorsteuerung, die Fügesequenz abgearbeitet. Dargestellt ist das Fügewerkzeug des ersten Ausführungsbeispiels. Das nachfolgend geschilderte Verfahren kann, soweit das Thermofügen betroffen ist, in analoger Weise aber auch mit den anderen Ausführungen ausgeführt werden.

In den Figuren 7 bis 9 ist die Sequenz der Schritte bis einschließlich des Fügens dargestellt. In einem ersten Schritt wird die Fügeelektrode 1 aus dem in Figur 6 gezeigten Ausgangszustand bis in den Kontakt mit dem Bördelflansch 13 bewegt und mit einem konstant gehaltenen Kontaktdruck $P_1$ an der Fügestelle gegen den Bördelflansch 13 gedrückt, während die Masseelektrode 2 noch eine von dem Bauteil 4 beabstandete Position einnimmt, wie dies Figur 7 zeigt. Unter Aufrechterhaltung des Kontaktdrucks $P_1$ der Fügeelektrode 1 wird im nächsten Schritt die Masseelektrode 2 in Wirkrichtung W bewegt und mit einem Kontaktdruck $P_2$ gegen das Bauteil 4 gedrückt Der Kontaktdruck $P_2$ ist größer als der Kontaktdruck $P_1$. Vorzugsweise wird er gleich bei der Kontaktierung auf den Druck eingestellt, der auch bei dem späteren Fügen herrscht. Der Kontaktdruck $P_1$ der Fügeelektrode 1 hingegen ist deutlich niedriger als der Druck beim Fügen. Die Vorkontaktierung mit dem niedrigen Kontaktdruck $P_1$ soll verhindern, dass die Fügeelektrode 1 gleich bei der Kontaktierung unter dem für das Fügen erforderlichen Fügedruck und hoher Geschwindigkeit gegen den Bördelflansch 13 bewegt wird. Erst im bereits etablierten Kontakt mit dem niedrigen Kontaktdruck $P_1$ wird der Druck auf den Fügedruck $P_3$ erhöht. Figur 9 zeigt den Zustand beim Fügen. Beide Elektroden 1 und 2 stehen in jeweils festem Kontakt mit dem zugeordneten Bauteil 3 oder 4, so dass durch Eintrag elektrischer Energie bei dem Fügedruck $P_3$ durch Widerstandspressschweißen der Stoffschluss an der Fügestelle des Bördelflansches 13 hergestellt wird.

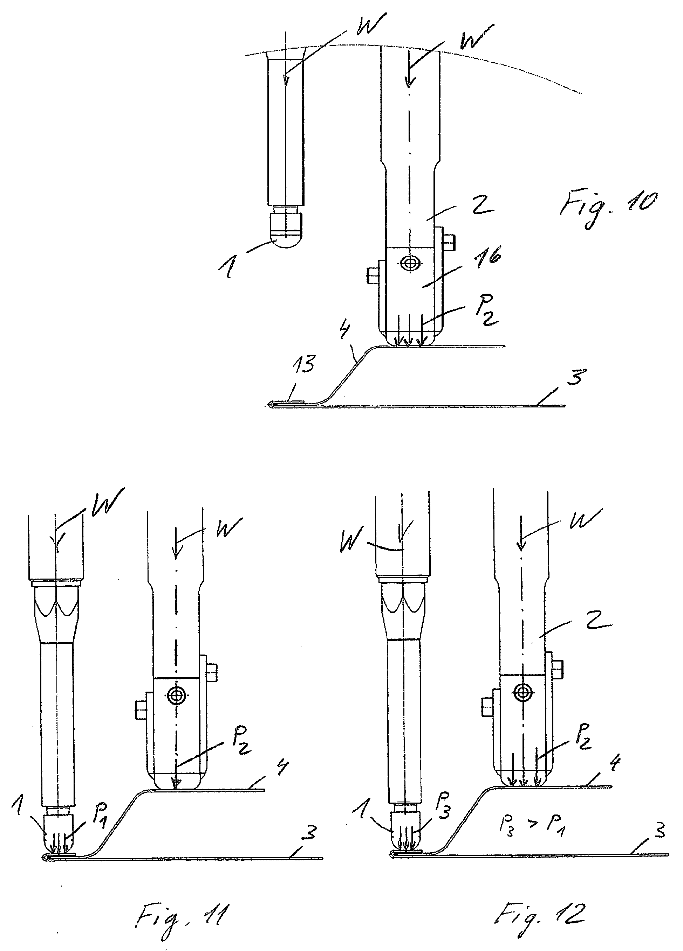

Die Figuren 10 bis 12 zeigen den Ablauf in einer zweiten Verfahrensvariante, in der nicht die Fügeelektrode 1, sondern die Masseelektrode 2 als erste in Kontakt mit dem Zusammenbau 3, 4, d. h. in Kontakt mit dem ihr zugeordneten Bauteil 4 gebracht wird. Es wird wieder das Werkzeug des ersten Ausführungsbeispiels verwendet, wobei im Ausgangszustand mit dem in Position relativ zu dem Zusammenbau 3, 4 befindlichen Werkzeug die Fügeelektrode 1 eine in Wirkrichtung W zurückgenommene Position einnimmt. Im Ausgangszustand steht auch die Masseelektrode 2 der Kontaktstelle des Bauteils 4 in einem geringen Abstand, gemessen in Wirkrichtung W, gegenüber. Aus diesem Zustand bewegt der Aktor das Werkzeug in Wirkrichtung W, so dass zuerst die Masseelektrode 2 in den Kontakt mit dem Bauteil 4 gelangt und mit dem Kontaktdruck $P_2$ wie in Figur 10 erkennbar gegen das Bauteil 4 gedrückt wird. Im nächsten Schritt wird die Fügeelektrode 1 relativ zur Basis 5 des Werkzeugs in Wirkrichtung W in Kontakt mit dem Bördelflansch 13 bewegt und mit dem niedrigen Kontaktdruck $P_1$ gegen den Bördelflansch 13 gedrückt, während der Kontakt der Masseelektrode 2 aufrechterhalten wird. In diesem in Figur 11 dargestellten Zustand wird der Kontaktdruck der Fügeelektrode 1 auf den Fügedruck $P_3$ erhöht. Die Masseelektrode 2 verbleibt im Kontakt mit dem Bauteil 4, vorzugsweise unter Aufrechterhaltung des Kontaktdrucks $P_2$. In diesem in Figur 12 dargestellten Zustand wird durch den Eintrag elektrischer Energie die Widerstandspressschweißung an der vorgegebenen Fügestelle des Bördelflansches 13 vorgenommen.

In den Ausführungsbeispielen, für die stellvertretend auf Figur 6 Bezug genommen wird, ist die Servoeinheit 6 eine Pneumatikeinheit mit einem mit Druckgas beaufschlagbaren Kolben. Der auf diesen Kolben wirkende Gasdruck $P_6$ erzeugt im Kontakt der Fügeelektrode 1 mit dem Bördelflansch 13 den Kontaktdruck, im Ausführungsbeispiel den anfänglichen, niedrigen Kontaktdruck $P_1$ und anschließend den Fügedruck $P_3$. In Figur 6 wird der Kolben der Servoeinheit 6 nur einseitig mit Druckgas beaufschlagt, vorzugsweise in Wirkrichtung W. Grundsätzlich kann der Druck auch in eine andere Richtung auf den Kolben wirken, solange durch entsprechende Umlenkmittel gewährleistet ist, dass dennoch der jeweilige Kontaktdruck erzeugt wird. Eine axial feste Verbindung der Fügeelektrode 1 mit dem Kolben der Servoeinheit 6 wird allerdings bevorzugt. Der an der Aufstandsfläche A herrschende Kontaktdruck wird durch den auf den Kolben der Servoeinheit 6 wirkenden Gasdruck $P_6$ bestimmt. Der Gasdruck $P_6$ wird in Anpassung an den jeweiligen Kontaktdruck $P_1$ und $P_3$ eingestellt, im Ausführungsbeispiel auf zwei unterschiedliche Druckniveaus, und auf dem jeweiligen Niveau konstant gehalten. Führt das Werkzeug relativ zu dem Zusammenbau 3, 4 Bewegungen in oder gegen die Wirkrichtung W aus, bleibt daher der dem jeweils eingestellten Gasdruck $P_6$ entsprechende Kontaktdruck erhalten, solange die Relativbewegung des Werkzeugs sich innerhalb der Grenzen der Strecke hält, um die der Kolben der Servoeinheit 6 in deren Zylinder bewegt werden kann.

Die Masseelektrode 2 wird von dem Kraftspeicher 11 relativ zu der Werkzeugbasis 5 und deren Schnellwechselkupplung 17 in Wirkrichtung W gespannt, wenn das Werkzeug die in den Figuren 6 und 10 gezeigte Ausgangsposition relativ zu dem Zusammenbau 3, 4 einnimmt. Ist der Kraftspeicher 11 wie bevorzugt als Druckfeder gebildet, stützt sich diese Druckfeder gegen die Wirkrichtung W an der Basis 5 des Werkzeugs und in Wirkrichtung W an einer Rückseite der Masseelektrode 2 ab. Alternativ zu einer mechanischen Feder kann beispielsweise eine Gasdruckfeder, also eine pneumatische Feder, den Kraftspeicher 11 bilden. Die Masseelektrode 2 kann von der Spannkraft des Kraftspeichers 11 abgesehen in und gegen die Wirkrichtung frei hin und her bewegbar an der Basis 5 angeordnet sein, wie dies beispielhaft in Figur 6 angedeutet ist.

Aufgrund dieser Anordnung der Elektroden 1 und 2 erfolgt die Kontaktierung aus der jeweiligen Ausgangsposition, wie sie Figur 6 für die erste Verfahrensvariante darstellt, dadurch, dass der Aktor das Werkzeug relativ zu dem Zusammenbau 3, 4 in die Wirkrichtung W bewegt. Wird das Werkzeug nach der Kontaktierung ein kleines Stück weiter in Wirkrichtung W bewegt, wobei solch eine Bewegung stets als relativ zum Zusammenbau 3, 4 unterstellt wird, stellt sich bei konstant gehaltenem Gasdruck $P_6$ der anfängliche Kontaktdruck $P_1$ ein,

der bei weiterer Bewegung in Wirkrichtung W somit konstant bleibt, bis der Kolben der Servoeinheit 6 eine durch Anschlag begrenzte Endposition einnimmt. Bei der Masseelektrode 2 sind die Verhältnisse so, dass nach Kontaktierung und weiterer Relativbewegung in Wirkrichtung W der Kontaktdruck $P_2$ durch die vom elastischen Kraftspeicher 11 aufgenommene Energie bestimmt wird. Wenn anschließend mit den im jeweiligen Kontakt befindlichen Elektroden 1 und 2, die Fügeelektrode 1 mit dem Kontaktdruck $P_1$ und die Masseelektrode 2 mit dem Kontaktdruck $P_2$, der Kontaktdruck der Fügeelektrode 1 auf den Fügedruck $P_3$ erhöht werden soll, muss lediglich der Gasdruck $P_6$ der Servoeinheit 6 entsprechend erhöht werden. Der Aktor nimmt die Reaktionskraft auch bei dieser Druckerhöhung auf.

In einer Modifikation kann die pneumatische Servoeinheit 6 durch einen Servoelektroantrieb ersetzt werden, der zum einen nach der vom Aktor ausgeführten Positionierung die aus der Ausgangsposition erforderliche Bewegung der Fügeelektrode 1 bewirkt und auch den jeweiligen Kontaktdruck einstellt, den der Aktor nur noch abstützen muss. Grundsätzlich kann stattdessen oder in Ergänzung auch der Kraftspeicher 11 bei der Masseelektrode 2 durch einen Servoelektroantrieb ersetzt werden, eine freie Bewegbarkeit in und gegen die Wirkrichtung W mit einer mittels Kraftspeicher erzeugten Federkraft in Wirkrichtung W wird allerdings für die Masseelektrode 2 bevorzugt.

Soll im Flanschbereich nicht geschweißt, sondern ein dort befindlicher Kleber 8 lokal gehärtet oder nur angeliert und hierdurch die Fixierung der Bauteile 3 und 4 relativ zueinander bewirkt werden, kann der Verfahrensablauf demjenigen des Schweißprozesses, insbesondere den vorstehend beschriebenen Verfahrensvarianten entsprechen. Es wird lediglich der Fügedruck $P_3$ im Vergleich zum Schweißprozess geringer eingestellt oder die Aufstandsfläche A vergrößert. Vorzugsweise wird auch die Energieflussdichte kleiner als beim Schweißen eingestellt. Bevorzugt werden alle drei genannten Parameter angepasst verändert, eine Änderung nur eines der genannten Parameter oder einer beliebigen Zweierkombination in jeweils die angegebene Richtung ist jedoch ebenfalls denkbar.

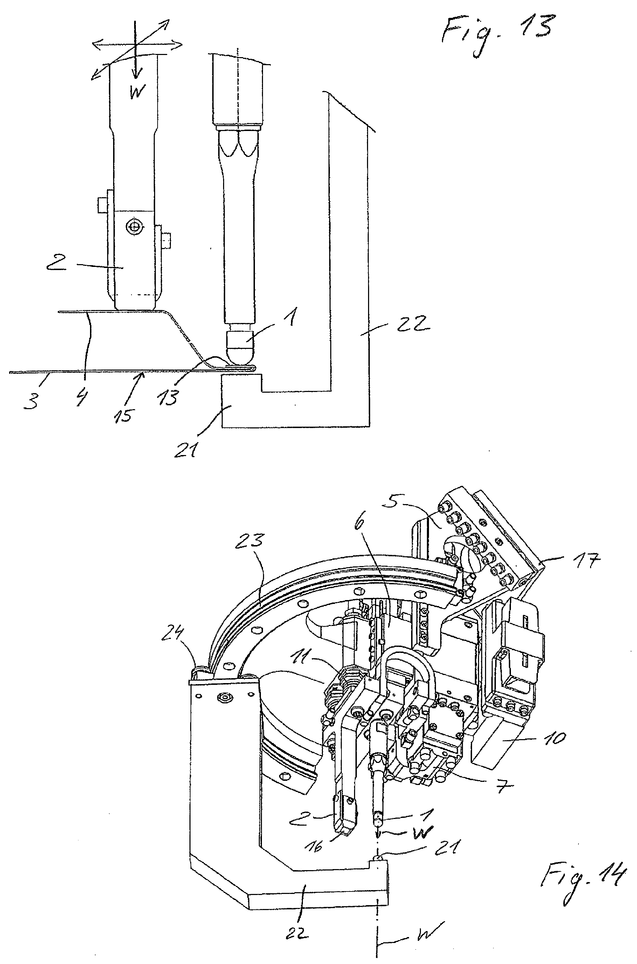

Figur 13 zeigt ein Bearbeitungswerkzeug eines dritten Ausführungsbeispiels, das in Bezug auf die Fügeelektrode 1 und deren Lagerung an der Werkzeugbasis und auch hinsichtlich der Masseelektrode 2 dem ersten Ausführungsbeispiel entspricht, soweit Unterschiede nicht erläutert werden. Im Unterschied zum ersten Ausführungsbeispiel ist das Bearbeitungswerkzeug des dritten Ausführungsbeispiels für ein Fügen eines Zusammenbaus 3, 4 eingerichtet, der während des Fügens nicht in einem Aufnahmebett, beispielsweise einem Falzbett, angeordnet ist, das den formschlüssig gefügten, vorzugsweise gefalzten Rand in Wirkrichtung W stützt, sondern ohne Unterstützung des Fügebereichs beispielsweise von einem weiteren Roboter gehalten wird. Dieser weitere Roboter bietet dem Fügeroboter, an dessen Roboterann das Bearbeitungswerkzeug angedockt ist, den Zusammenbau 3, 4 sozusagen an. Der das Bearbeitungswerkzeug tragende Roboter und der weitere Roboter können beim Fügen insbesondere in einer Master-Slave-Betriebsweise kooperieren. Im Hinblick auf das Zusammenwirken solcher Roboter wird die PCT/EP2008/004074 in Bezug genommen.

Das Bearbeitungswerkzeug ist zusätzlich mit einem Widerlager 21 ausgestattet, das während des Fügens die von der Fügeelektrode 1 auf den Zusammenbau 3, 4 ausgeübte Kraft aufnimmt. Das Widerlager 21 ist an einem Bügel 22 gebildet, der vom Werkzeug aus gesehen den randseitigen Fügebereich des Zusammenbaus 3, 4 umgreift, um eine das Aufnahmebett der beiden anderen Beispiele lokal ersetzende Aufnahme zu bilden, die der Aufstandsfläche A der Fügeelektrode 1 in Wirkrichtung W gegenüberliegt. Das Widerlager 21 ist an der Werkzeugbasis vorzugsweise beweglich gelagert, um den Zugang zur jeweiligen Fügestelle zu erleichtern, und ist in der gezeigten Position der Fügeelektrode 1 gegenüberliegend fixierbar. Grundsätzlich kann das Widerlager 21 jedoch auch unbeweglich mit der Werkzeugbasis 5 verbunden sein, was auch den Fall einschließt, dass es mit der Basis in einem Stück geformt ist.

Die Masseelektrode 2 ist im Unterschied zu den beiden anderen Ausführungsbeispielen relativ zur Fügeelektrode 1 nicht nur in und gegen die Wirkrichtung W, sondern auch quer zur Wirkrichtung W beweglich. Angedeutet ist eine Zwei-Achsen-Beweglichkeit längs zweier zueinander und jeweils zur Wirkrichtung W orthogonal weisender Achsen. Vorteilhaft ist auch bereits eine Beweglichkeit längs nur einer einzigen quer, vorzugsweise orthogonal zur Wirkrichtung W weisenden Achse. Ebenso könnte die Querbeweglichkeit dadurch erhalten werden, dass die Masseelektrode 2 um eine zur Wirkrichtung W parallele Schwenkachse, beispielsweise eine Längsachse der Fügeelektrode 1, schwenkbeweglich und optional längs des Schwenkhebels auch translatorisch beweglich ist. Eine Beweglichkeit der Masseelektrode 2 relativ zur Fügeelektrode 1 in wenigstens zwei Freiheitsgraden der Bewegung, zum einen nämlich in Wirkrichtung W und zum anderen in wenigstens eine Richtung quer zur Wirkrichtung W kann sicherer als eine Relativbeweglichkeit nur in Wirkrichtung W eine widerstandsarme Kontaktierung des Bauteils 4 gewährleisten, da sie hierfür an günstiger Stelle des Bauteils 4 relativ zur Fügeelektrode positioniert werden kann.

Alternativ oder ergänzend zu einer quer zur Wirkrichtung W beweglichen Masseelektrode 2 kann auch das Widerlager 21 die für die Masseelektrode 2 beschriebene Beweglichkeit quer zur Wirkrichtung W aufweisen. Auch mit einem beweglichen Widerlager 21, insbesondere, wenn es mittels eines querbeweglichen Bügels gebildet wird, kann die Bewegungsfreiheit des Werkzeugs beim Fügen von Bauteilen, die nicht in einem Bett aufgenommen sind, verbessert werden. Schließlich soll noch darauf hingewiesen werden, dass eine quer zur Wirkrichtung W relativ zur Fügeelektrode 1 bewegliche Masseelektrode 2 auch für das erste und das zweite Ausführungsbeispiel von Vorteil ist, um im Rahmen der Querbeweglichkeit die für eine Kontaktierung der Masseelektrode 2 günstigste Stelle des zweiten Bauteils 4 auswählen zu können.

Figur 14 zeigt das Bearbeitungswerkzeug des dritten Ausführungsbeispiels in einer perspektivischen Sicht. Dargestellt ist das gesamte Werkzeug vom Befestigungsflansch 17 der Basis 5 bis zu den Elektroden 1 und 2 und dem Widerlager 21. Das Widerlager 21 ist wie bereits anhand der Figur 13 erläutert an einem freien Ende eines Bügels 22 gebildet, der an der Basis 5 beweglich abgestützt ist. Für die bewegliche Abstützung ist beispielhaft ein Kurvengelenk gewählt. Das Kurvengelenk wird von einer mit der Basis 5 fest verbundenen Führungsbahn 23 und dem Bügel 22 gebildet. Der Bügel 22 ist das Eingriffsglied des Kurvengelenks. Die Führungsbahn 23 erstreckt sich in einem Bogen um die Längsachsen W der Elektroden 1 und 2. In Ausbildung des Eingriffsglieds sind am Bügel Rollen 24 drehbeweglich und an der Führungsbahn 23 abrollbar befestigt. Eine der Rollen 24 wird drehangetrieben, um den Bügel 22 längs der Führungsbahn 23 und somit quer zur Wirkrichtung W zu bewegen und dadurch in einer für das Thermofügen am jeweiligen Fügeort günstigen, dem Fügen nicht hinderlichen Position zu positionieren. Bei der Bewegung des Bügels 22 steht dessen Widerlager 21 der Fügeelektrode 1 in Wirkrichtung W stets gegenüber, verändert also relativ zur Fügeelektrode 1 seinen Ort nicht, vielmehr schwenkt der Bügel 22 um sein Widerlager 21.

Bezugszeichen:

1   Fügeelektrode
2   Masseelektrode
3   äußeres Bauteil
4   inneres Bauteil
5   Werkzeugbasis, Werkzeugkonsole
6   Servoeinheit der Fügeelektrode
7   Mittelfrequenztransformator
8   Kleber, Klebeverbindung
9   stoffschlüssige Verbindung
10   Steuereinheit
11   Kraftspeicher
12   flexibles Lamellenband
13   Bördelflansch
14   Widerlager, Auflage, Falzbett
15   Sichtfläche
16   Massekontakt
17   Aktoranschluss, Roboterflanschplatte, Schnellwechselkupplung
18   Rollfalzwerkzeug
19   Falzrolle
20   Servoeinheit der Masseelektrode
21   Widerlager
22   Bügel

23    Führungsbahn
24    Rolle

$A_1$    Aufstandsfläche Fügeelektrode
$A_2$    Aufstandsfläche Masseelektrode
$P_1$    niedriger Kontaktdruck der Fügeelektrode
$P_2$    Kontaktdruck der Masseelektrode
$P_3$    Fügedruck
$P_6$    Gasdruck
W    Wirkrichtung, Wirkachse

**Patentansprüche**

1. Verfahren zum stoffschlüssigen Fügen gefalzter Flansche von Exterieurbauteilen von Fahrzeugkarosserien, bei dem

    a) eine Fügeelektrode (1) mit einem Fügedruck ($P_3$) in eine Wirkrichtung (W) gegen einen Bördelflansch (13) des ersten Bauteils (3) gedrückt wird,
    b) eine Masseelektrode (2) in die gleiche Wirkrichtung (W) gegen ein zweites Bauteil (4) gedrückt wird, das mit einem Bauteilrand in eine von dem ersten Bauteil (1) mittels des Bördelflansches (13) gebildete Falztasche ragt,
    c) die Bauteile (3, 4) im Bereich des Kontakts mit der Fügeelektrode (1) thermisch stoffschlüssig lokal gefügt werden,
    d) die Fügeelektrode (1) in Kontakt mit dem Bördelflansch (13) gebracht und mit einem ersten Kontaktdruck ($P_1$) gegen den Bördelflansch (13) gedrückt wird,
    e) und die Masseelektrode (2) in Kontakt mit dem zweiten Bauteil (4) gebracht und mit einem zweiten Kontaktdruck ($P_2$) gegen das zweite Bauteil (4) gedrückt wird,
    **dadurch gekennzeichnet, dass**
    f) die Bauteile (3, 4) bei dem stoffschlüssigen Fügen im Bereich des Bördelflansches (13) vollflächigen Kontakt haben,
    g) der Kontaktdruck ($P_1$), mit der die Fügeelektrode (1) gegen das erste Bauteil (3) drückt, auf den Fügedruck ($P_3$) erhöht wird, während die Masseelektrode (2) weiterhin gegen das zweite Bauteil (4) drückt,
    h) und die Bauteile (3, 4) bei dem Fügedruck ($P_3$) durch mittels der Elektroden (1, 2) eingetragene Energie stoffschlüssig gefügt werden.

2. Verfahren nach Anspruch 1, bei dem die Bauteile (3, 4) durch Pressschweißen, vorzugsweise Widerstandspressschweißen, im Bereich des Kontakts mit der Fügeelektrode (1) gefügt werden, vorzugsweise vor dem Aushärten eines optional in der Falztasche befindlichen Falzklebers (8).

3. Verfahren nach einem der vorhergehenden Ansprüche, bei dem so gefügt wird, dass ein in der Falztasche befindlicher Falzkleber (8) im Bereich des Kontakts mit der Fügeelektrode (1) gehärtet wird ohne die Bauteile (3, 4) im Bereich des Kontakts zu verschweißen, wobei das erste Bauteil (3), vorzugsweise auch das zweite Bauteil (4), zumindest im Bereich des Bördelflansches (13) vorzugsweise aus einem Leichtmetallwerkstoff besteht.

4. Verfahren nach einem der vorhergehenden Ansprüche und wenigstens einem der folgenden Merkmale:

    - die Bauteile (3, 4) sind während der Ausführung des Verfahrens durch eine Spanneinrichtung, optional auch eine Aufnahmeeinrichtung (14), geometrisch zueinander in Soll-Position ausgerichtet;
    - die Bauteile (3, 4) sind bei Ausführung des Verfahrens im Falzbett (14) eines die Falztasche formenden Falzprozesses angeordnet;
    - das Verfahren wird mittels eines Industrieroboters ausgeführt, der die Elektroden (1, 2) zum Fügen relativ zu den Bauteilen (3, 4) positioniert.

5. Verfahren nach einem der vorhergehenden Ansprüche, bei dem ein die Elektroden (1,2) umfassendes Fügewerkzeug in Kombination mit einem Rollfalzwerkzeug stationär oder an einem im Raum beweglichen Aktor, vorzugsweise Arm eines Industrieroboters, angeordnet ist und das Rollfalzen und das stoffschlüssige Fügen in einem längs des Bördelflansches (13) gemeinsamen Arbeitslauf oder direkt nacheinander in separaten Arbeitsdurchgängen durchgeführt werden.

6. Verfahren nach einem der vorhergehenden Ansprüche, bei dem das stoffschlüssige Fügen in einen Rollfalzprozess integriert ist, dergestalt, dass der Rollfalzprozess an vorgegebener Stelle angehalten wird, um das Fügen lokal durchzuführen, und jeweils nach dem Fügen fortgesetzt wird und diese Sequenz des Rollfalzens und stoffschlüssigen Fügens wiederholt wird, bis die Falzverbindung und die Fügeverbindungen fertiggestellt sind.

7. Verfahren nach einem der Ansprüche 1 bis 5, bei dem das stoffschlüssige Fügen in einen Rollfalzprozess integriert ist, dergestalt, dass ein die Elektroden (1, 2) umfassendes Fügewerkzeug in Kombination mit einem Rollfalzwerkzeug stationär oder an einem im Raum beweglichen Aktor, vorzugsweise Arm eines Industrieroboters, angeordnet und die Fügeelektrode (1) als Rollglied und die Masseelektrode (2) als Roll- oder Gleitglied, vorzugsweise als Bürste oder Gewebeband, ausgeführt sind und die Elektroden (1, 2) während des fortlaufenden Rollfalzprozesses mit den Bauteilen (3, 4) kontinuierlich in Kontakt gehalten oder nur an vorbestimmten Stellen in Kontakt gebracht werden, um die Bauteile (3, 4) an den vorgegebenen Stellen stoffschlüssig zu fügen.

8. Verfahren nach einem der vorhergehenden Ansprüche, bei dem die Schritte (f) und (g) nacheinander, Schritt (f) vor oder nach Schritt (g), durchgeführt werden.

9. Verfahren nach einem der vorhergehenden Ansprüche, bei dem der erste Kontaktdruck ($P_1$) vor der Erhöhung auf den Fügedruck ($P_3$) über eine Haltezeitdauer größer 0 konstant gehalten und die Masseelektrode (2) während der Haltezeit oder bereits zuvor gegen das zweite Bauteil (4) gedrückt wird.

10. Verfahren nach einem der vorhergehenden Ansprüche, bei dem der Fügedruck ($P_3$) der Fügeelektrode (1) aus dem Bereich von 5 bis 150 N/mm$^2$ gewählt wird, wobei die Fügeelektrode (1) vorzugsweise mit einer Kraft zwischen 50 und 250 N gegen das erste Bauteil (3) gedrückt wird.

11. Bearbeitungswerkzeug zum stoffschlüssigen Fügen gefalzter Flansche von Exterieurbauteilen von Fahrzeugkarosserien, vorzugsweise zur Durchführung des Verfahrens nach einem der vorhergehenden Ansprüche, das Bearbeitungswerkzeug umfassend:

a) eine Basis (5, 17), die stationär angeordnet oder an einem im Raum beweglichen Aktuator angedockt oder andockbar ist,
b) eine Fügeelektrode (1) und eine Masseelektrode (2), die auf der Basis (5, 17) mit gleicher Wirkrichtung (W) angeordnet sind, so dass die Elektroden (1, 2) gemeinsam in die Wirkrichtung (W) gegen zu fügende Bauteile (3, 4) gedrückt werden können,
c) wobei die Fügeelektrode (1) relativ zu der Basis (5, 17) in und gegen die Wirkrichtung (W) beweglich ist und mittels einer Servoeinheit (6) in Wirkrichtung (W) mit einer der Größe nach in vorgegebenen Stufen oder kontinuierlich veränderbaren Kraft oder einem solch eine Kraft erzeugenden Druck beaufschlagbar ist,
**dadurch gekennzeichnet, dass**
d) die Fügeelektrode (1) und die Masseelektrode (2) auf der Basis (5, 17) in Wirkrichtung (W) relativ zueinander derart beweglich angeordnet sind, dass die Fügeelektrode (1) an einer Fügestelle mit einem ersten Kontaktdruck gegen eines der zu fügenden Bauteile (3, 4) gedrückt werden kann, während die Masseelektrode (2) kontaktlos ist, und die Masseelektrode (2) anschließend gegen ein anderes der zu fügenden Bauteile (3, 4) gedrückt und nach Herstellung dieses Zustands der Kontaktdruck der Fügeelektrode (1) auf einen Fügedruck erhöht werden kann.

12. Bearbeitungswerkzeug nach dem vorhergehenden Anspruch, **dadurch gekennzeichnet, dass** die Masseelektrode (2) relativ zu der Basis (5, 17) in und gegen die Wirkrichtung (W) beweglich ist und eine Einrichtung (11) zur Beaufschlagung der Masseelektrode (2) mit einer in Wirkrichtung (W) wirkenden Kraft, vorzugsweise Federkraft, vorgesehen ist.

13. Bearbeitungswerkzeug nach einem der vorhergehenden Ansprüche und wenigstens einem der folgenden Merkmale:

(i) wenigstens eine der Elektroden (1, 2), im Falle nur einer der Elektroden (1, 2) die Fügeelektrode (1), ist eine drehbar gelagerte Rolle;
(ii) das Bearbeitungswerkzeug umfasst einen Mittelfrequenztransformator (7) für die Energiezufuhr zu den Elektroden (1,2).

14. Bearbeitungswerkzeug nach einem der vorhergehenden Ansprüche, **dadurch gekennzeichnet, dass** eine beim Fügen in Bauteilkontakt befindliche Aufstandsfläche ($A_1$) der Fügeelektrode (1) kleiner als 20 mm$^2$, vorzugsweise aus dem Bereich von 1 bis 13 mm$^2$ gewählt ist, wobei eine größte Erstreckung der Aufstandsfläche ($A_1$) vorzugsweise höchstens 4 mm, bevorzugter 1 bis 3 mm beträgt.

15. Bearbeitungswerkzeug nach einem der vorhergehenden Ansprüche und wenigstens einem der folgenden Merkmale:

(i) die Masseelektrode (2) weist einen in sich nachgiebigen Kontakt (16) auf, der eine beim Fügen in Bauteilkontakt befindliche Aufstandsfläche ($A_2$) bildet, wobei der Kontakt vorzugsweise elastisch und vorzugsweise zumindest in Wirkrichtung (W) nachgiebig ist;
(ii) die Masseelektrode (2) ist quer zur Wirkrichtung (W) relativ zu der Fügeelektrode (1) beweglich, um den Ort des Kontakts der Masselektrode (2) mit dem zweiten Bauteil (4) relativ zu einer Fügestelle der Fügeelektrode (1) verändern zu können.

16. Bearbeitungswerkzeug nach einem der vorhergehenden Ansprüche, ferner umfassend ein an der Basis (5, 17) abgestütztes Widerlager (21), das in Wirkrichtung (W) einer Aufstandsfläche ($A_1$) der Fügeelektrode (1) gegenüberliegend eine Aufnahme für die Bauteile (3, 4) bildet und den beim Fügen von der Fügeelektrode (1) auf die Bauteile (3, 4) ausgeübten Fügedruck ($P_3$) aufnimmt und beim Fügen einen über eine Fügestelle der Bauteile (3, 4) innerhalb des Bearbeitungswerkzeugs geschlossenen Kraftfluss gewährleistet.

## Claims

1. A method for joining hemmed flanges of exterior component parts of car bodies in a material lock, wherein:

    a) a joining electrode (1) is pressed in an acting direction (W) against a hemming flange (13) of the first component part (3) with a joining pressure ($P_3$);

    b) an earth electrode (2) is pressed in the same acting direction (W) against a second component part (4), a component part edge of which protrudes into a hem slot formed by the first component part (3) by means of the hemming flange (13);

    c) the component parts (3, 4) are locally joined thermally in a material lock in the region of contact with the joining electrode (1);

    d) the joining electrode (1) is moved into contact with the hemming flange (13) and pressed against the hemming flange (13) with a first contact pressure ($P_1$);

    e) and the earth electrode (2) is moved into contact with the second component part (4) and pressed against the second component part (4) with a second contact pressure ($P_2$);

    **characterised in that**

    f) the component parts (3, 4) are in full-faced contact in the region of the hemming flange (13) while they are being joined in a material lock,

    g) the contact pressure ($P_1$) with which the joining electrode (1) presses against the first component part (3) is increased to the joining pressure ($P_3$), while the earth electrode (2) continues to press against the second component part (4),

    h) and the component parts (3, 4) are joined in a material lock at the joining pressure ($P_3$) by energy introduced by means of the electrodes (1, 2).

2. The method according to Claim 1, wherein the component parts (3, 4) are joined in the region of contact with the joining electrode (1) by pressure welding, preferably resistance welding, preferably before a hem glue (8), which is optionally provided in the hem slot, cures.

3. The method according to any one of the preceding claims, wherein the joining process is performed in such a way that a hem glue (8) provided in the hem slot is hardened in the region of contact with the joining electrode (1) without welding the component parts (3, 4) in the region of contact, wherein the first component part (3) and preferably also the second component part (4) preferably consists of a light metal material at least in the region of the hemming flange (13).

4. The method according to any one of the preceding claims and at least one of the following features:

    - while the method is being performed, the component parts (3, 4) are geometrically orientated in a target position with respect to each other by a tensing device and optionally also a receptacle device (14);
    - while the method is being performed, the component parts (3, 4) are arranged in the hemming bed (14) of a hemming process which forms the hem slot;
    - the method is performed by means of an industrial robot which positions the electrodes (1, 2) relative to the component parts (3, 4) for joining.

5. The method according to any one of the preceding claims, wherein a joining tool comprising the electrodes (1, 2) is arranged, in combination with a roll-hemming tool, stationarily or on an actuator which can be spatially moved, preferably the arm of an industrial robot, and the roll-hemming process and the process of joining in a material lock are performed in a combined processing run along the length of the hemming flange (13) or in direct succession in separate processing runs.

6. The method according to any one of the preceding claims, wherein the process of joining in a material lock is integrated into a roll-hemming process in such a way that the roll-hemming process is paused at a predetermined point, in order to locally perform the joining process, and respectively continued after the joining process, and this sequence of roll-hemming and joining in a material lock is repeated until the hemmed connection and the joined connections are complete.

7. The method according to any one of Claims 1 to 5, wherein the process of joining in a material lock is integrated into a roll-hemming process in such a way that a joining tool comprising the electrodes (1, 2) is arranged, in combination with a roll-hemming tool, stationarily or on an actuator which can be spatially moved, preferably the arm of an industrial robot, and the joining electrode (1) is embodied as a rolling member and the earth electrode (2) is embodied as a rolling or sliding member, preferably a brush or fabric belt, and the electrodes (1, 2) are held continuously in contact with the component parts (3, 4) during the ongoing roll-hemming process or are merely moved into contact with the component parts (3, 4) at predetermined points, in order to join the component parts (3, 4) in a material lock at the predetermined points.

8. The method according to any one of the preceding claims, wherein the steps (f) and (g) are performed successively, with step (f) before or after step (g).

9. The method according to any one of the preceding claims, wherein the first contact pressure ($P_1$) is kept constant for a holding time period of greater than 0 before it is increased to the joining pressure ($P_3$), and the earth electrode (2) is pressed against the second component part (4) during or even before the holding time.

10. The method according to any one of the preceding claims, wherein the joining pressure ($P_3$) of the joining electrode (1) is selected from the range of 5 to 150 N/mm$^2$, wherein the joining electrode (1) is preferably pressed against the first component part (3) with a force of between 50 and 250 N.

11. A processing tool for joining hemmed flanges of exterior component parts of car bodies in a material lock and preferably for performing the method according to any one of the preceding claims, said processing tool comprising:

    a) a base (5, 17) which is arranged stationarily or is or can be docked with an actuator which can be spatially moved;
    b) a joining electrode (1) and an earth electrode (2) which are arranged on the base (5, 17) with the same acting direction (W), such that the electrodes (1, 2) can be jointly pressed in the acting direction (W) against component parts (3, 4) to be joined;
    c) wherein the joining electrode (1) can be moved relative to the base (5, 17) in and counter to the acting direction (W) and charged, by means of a servo unit (6), with a force in the acting direction (W) which is variable in magnitude, either continuously or in predetermined increments, or with a pressure which generates such a force;
    **characterised in that**
    d) the joining electrode (1) and the earth electrode (2) are arranged such that they can be moved relative to each other on the base (5, 17) in the acting direction (W), such that the joining electrode (1) can be pressed against one of the component parts (3, 4) to be joined with a first contact pressure at a joining point, while the earth electrode (2) is without contact, and the earth electrode (2) can then be pressed against another of the component parts (3, 4) to be joined and, once this state has been established, the contact pressure of the joining electrode (1) can be increased to a joining pressure.

12. The processing tool according to the preceding claim, **characterised in that** the earth electrode (2) can be moved relative to the base (5, 17) in and counter to the acting direction (W), and a device (11) is provided for charging the earth electrode (2) with a force, preferably a spring force, which acts in the acting direction (W).

13. The processing tool according to any one of the preceding claims and at least one of the following features:

    (i) at least one of the electrodes (1, 2), and if only one of the electrodes (1, 2) then the joining electrode (1), is a rotatably mounted roller;
    (ii) the processing tool comprises a medium-frequency transformer (7) for supplying energy to the electrodes (1, 2).

14. The processing tool according to any one of the preceding claims, **characterised in that** a contact area ($A_1$) of the joining electrode (1) which is in contact with a component part during the joining process is smaller than 20 mm$^2$ and is preferably selected from the range of 1 to 13 mm$^2$, wherein a maximum extent of the contact area ($A_1$) preferably measures 4 mm, more preferably 1 to 3 mm, at most.

15. The processing tool according to any one of the preceding claims and at least one of the following features:

    (i) the earth electrode (2) comprises a contact (16) which is inherently flexible and which forms a contact area ($A_2$) which is in contact with a component part during the joining process, wherein the contact is preferably elastically flexible, preferably in at least the acting direction (W);
    (ii) the earth electrode (2) can be moved transverse to the acting direction (W) relative to the joining electrode (1), in order to be able to vary the location of the contact between the earth electrode (2) and the second component part (4) relative to a joining point of the joining electrode (1).

16. The processing tool according to any one of the preceding claims, further comprising an abutment (21) which is supported on the base (5, 17) and forms a receptacle for the component parts (3, 4), opposite a contact area ($A_1$) of the joining electrode (1) in the acting direction (W), and absorbs the joining pressure ($P_3$) exerted by the joining electrode (1) on the component parts (3, 4) during the joining process and ensures a flow of force, which is closed within the processing tool via a joining point of the component parts (3, 4), during the joining process.

**Revendications**

1. Procédé pour assembler par liaison de matière des rebords pliés de composants extérieurs de carrosseries de véhicules, comportant les étapes consistant à :

   a) presser une électrode d'assemblage (1) contre un rebord de bordage (13) du premier composant (3) avec une pression d'assemblage ($P_3$) dans une direction d'action (W),
   b) presser une électrode de masse (2) dans la même direction d'action (W) contre un second composant (4) qui fait saillie avec un bord de composant dans une poche de pliage formée par le premier composant (1) au moyen du collet (13),
   c) assembler localement et thermiquement par liaison de matière les composants (3, 4) dans la zone du contact avec l'électrode d'assemblage (1),
   d) mettre l'électrode d'assemblage (1) en contact avec le collet (13) et la presser contre le collet (13) avec une première pression de contact ($P_1$),
   e) et mettre l'électrode de masse (2) en contact avec le second composant (4) et la presser contre le second composant (4) avec une seconde pression de contact ($P_2$),
   **caractérisé en ce que**
   f) les composants (3, 4) ont un contact sur toute leur surface lors de l'assemblage par liaison de matière dans la zone du collet (13),
   g) la pression de contact ($P_1$) avec laquelle l'électrode d'assemblage (1) presse contre le premier composant (3), est augmentée jusqu'à la pression d'assemblage ($P_3$), pendant que l'électrode de masse (2) presse contre le second composant (4),
   h) et les composants (3, 4) sont assemblés par liaison de matière par la pression d'assemblage ($P_3$) au moyen de l'énergie fournie par les électrodes (1, 2).

2. Procédé selon la revendication 1, dans lequel les composants (3, 4) sont assemblés par soudage par pression, de préférence par soudage avec résistance par pression, dans la zone du contact avec l'électrode d'assemblage (1), de préférence avant le durcissement d'une colle de pliage (8) facultativement située dans la poche de pliage.

3. Procédé selon l'une des revendications précédentes, dans lequel l'assemblage est réalisé de telle sorte qu'une colle de pliage (8) située dans la poche de pliage durcit dans la zone du contact avec l'électrode d'assemblage (1) sans avoir à souder les composants (3, 4) dans la zone du contact, dans lequel le premier composant (3), de préférence également le second composant (4), sont de préférence constitués d'un matériau en métal léger au moins dans la zone du collet (13).

4. Procédé selon l'une des revendications précédentes et présentant au moins l'une des caractéristiques suivantes :

   - les composants (3, 4) sont orientés géométriquement l'un par rapport à l'autre dans une position de consigne pendant la mise en oeuvre du procédé par un dispositif de serrage, facultativement également par un dispositif de réception (14),
   - les composants (3, 4) sont agencés, lors de la mise en oeuvre du procédé, dans un lit de pliage (14) d'un processus de pliage formant la poche de pliage,
   - le procédé est mis en oeuvre au moyen d'un robot industriel qui positionne les électrodes (1, 2) par rapport aux composants (3, 4) en vue d'un assemblage.

5. Procédé selon l'une des revendications précédentes, dans lequel un outil d'assemblage incluant les électrodes (1, 2) est agencé en combinaison avec un outil de pliage à molette de manière fixe ou sur un actionneur mobile dans l'espace, de préférence un bras d'un robot industriel, et le pliage à molette et l'assemblage par liaison de matière sont exécutés dans une course de travail commune le long du collet (13) ou directement l'un après l'autre dans des passes de travail séparées.

6. Procédé selon l'une des revendications précédentes, dans lequel l'assemblage par liaison de matière est intégré dans un processus de pliage à molette, de telle sorte que le processus de pliage à molette est arrêté à un emplacement prédéfini afin de réaliser localement l'assemblage, et est respectivement poursuivi après l'assemblage et cette séquence du pliage à molette et de l'assemblage par liaison de matière est répétée jusqu'à ce que le sertissage et les assemblages soient terminés.

7. Procédé selon l'une des revendications 1 à 5, dans lequel l'assemblage par liaison de matière est intégré dans un processus de pliage à molette, de telle sorte qu'un outil d'assemblage incluant les électrodes (1, 2) est agencé en combinaison avec un outil de pliage à molette de manière fixe ou sur un actionneur mobile dans l'espace, de préférence un bras d'un robot industriel, et l'électrode d'assemblage (1) est réalisée sous la forme d'un organe roulant et l'électrode de masse (2) est réalisée sous la forme d'un organe roulant ou glissant, de préférence sous forme de brosse ou de ruban textile, et les électrodes (1, 2) sont maintenues en contact continu avec les composants (3, 4) pendant le processus de pliage continu à molette ou sont mises en contact uniquement à des emplacements prédéterminés afin d'assembler les composants (3, 4) aux emplacements prédéfinis par liaison de matière.

8. Procédé selon l'une des revendications précédentes, dans lequel les étapes (f) et (g) sont exécutées l'une après l'autre, l'étape (f) étant exécutée avant ou après l'étape (g).

9. Procédé selon l'une des revendications précédentes, dans lequel la première pression de contact ($P_1$) est maintenue constante supérieure à 0 avant l'augmentation jusqu'à la pression d'assemblage ($P_3$) par l'intermédiaire d'une durée de maintien et l'électrode de masse (2) est pressée contre le second composant (4) pendant ou avant la durée de maintien.

10. Procédé selon l'une des revendications précédentes, dans lequel la pression d'assemblage ($P_3$) de l'électrode assemblage (1) est choisie dans la plage de 5 à 150 N/mm$^2$, dans lequel l'électrode d'assemblage (1) est de préférence pressée contre le premier composant (3) avec une force comprise entre 50 et 250 N.

11. Outil d'usinage pour assembler par liaison de matière des rebords pliés de composants extérieurs de carrosseries de véhicules, de préférence pour mettre en oeuvre le procédé selon l'une des revendications précédentes, l'outil d'usinage comportant :

a) une base (5, 17) qui est agencée de manière fixe ou est accrochée ou peut être accrochée à un actionneur mobile dans l'espace,
b) une électrode d'assemblage (1) et une électrode de masse (2) qui sont agencées sur la base (5, 17) avec la même direction d'action (W), de telle sorte que les électrodes (1, 2) peuvent être pressées conjointement dans la direction d'action (W) contre des composants (3, 4) à assembler,
c) dans lequel l'électrode d'assemblage (1) est mobile par rapport à la base (5, 17) dans et à l'opposé de la direction d'action (W) et une force variable en continu ou par paliers prédéfinis en fonction de l'intensité ou une pression générant une telle force peut être appliquée dans la direction d'action (W) au moyen d'une unité d'asservissement (6),
**caractérisé en ce que**
d) l'électrode d'assemblage (1) et l'électrode de masse (2) sont agencées de manière mobile l'une par rapport à l'autre sur la base (5, 17) dans la direction d'action (W) de telle sorte que l'électrode d'assemblage (1) peut être pressée contre l'un des composants (3, 4) à assembler à un emplacement d'assemblage avec une première pression de contact, pendant que l'électrode de masse (3) est maintenue sans contact, et l'électrode de masse (2) est ensuite pressée contre un autre des composants (3, 4) à assembler, et après l'obtention de cet état, la pression de contact de l'électrode d'assemblage (1) peut être augmentée jusqu'à la pression d'assemblage.

12. Outil d'usinage selon la revendication précédente, **caractérisé en ce que** l'électrode de masse (2) est mobile par rapport à la base (5, 17) dans et à l'opposé de la direction d'action (W), et un dispositif (11) est prévu pour appliquer à l'électrode de masse (2) une force agissant dans la direction d'action (W), de préférence une force élastique.

13. Outil d'usinage selon l'une des revendications précédentes et présentant au moins l'une des caractéristiques suivantes :

(i) au moins l'une des électrodes (1, 2), l'électrode d'assemblage (1) dans le cas d'une seule des électrodes (1, 2), est une molette montée de manière rotative,
(ii) l'outil d'usinage inclut un transformateur à moyenne fréquence (7) pour la fourniture d'énergie aux électrodes (1, 2).

14. Outil d'usinage selon l'une des revendications précédentes, **caractérisé en ce qu'**une surface de contact ($A_1$) de l'électrode d'assemblage (1) en contact avec les composants lors de l'assemblage est choisie inférieure à 20 mm$^2$, de préférence dans la plage de 1 à 13 mm$^2$, dans lequel la plus grande étendue de la surface de contact ($A_1$) est de préférence d'au plus 4 mm, de manière plus préférée de 1 à 3 mm.

15. Outil d'usinage selon l'une des revendications précédentes et présentant au moins l'une des caractéristiques suivantes :

(i) l'électrode de masse (2) comporte un contact (16) souple en lui-même qui forme une surface de contact ($A_1$) en contact avec les composants lors de l'assemblage, dans lequel le contact est de préférence élastiquement souple et de préférence au moins dans la direction d'action (W),
(ii) l'électrode de masse (2) est mobile par rapport à l'électrode d'assemblage (1) transversalement à la direction d'action (W) afin de pouvoir faire varier l'emplacement du contact de l'électrode de masse (2) avec le second composant (4) par rapport à un emplacement d'assemblage de l'électrode d'assemblage (1).

**16.** Outil d'usinage selon l'une des revendications précédentes, incluant en outre une butée (21) supportée par la base (5, 17), laquelle butée forme, à l'opposé de la direction d'action (W) d'une surface de contact ($A_1$) de l'électrode d'assemblage (1), un support pour les composants (3, 4), et augmente la pression d'assemblage ($P_3$) exercée sur les composants (3, 4) lors de l'assemblage par l'électrode d'assemblage (1), et assure, lors de l'assemblage, un flux de force enfermé à l'intérieur de l'outil d'usinage au-dessus d'un emplacement d'assemblage des composants (3, 4).

Fig. 2

Fig. 3

Fig. 4

Fig. 5

Fig. 6

Fig. 7

Fig. 8

Fig. 9

Fig. 10

Fig. 11

Fig. 12

*Fig. 13*

*Fig. 14*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19927208 B4
- EP 1782908 A1
- JP 2004074259 A
- JP 01057986 A
- KR 20020049227 A
- US 5714730 A
- WO 2008148440 A1
- EP 2008004074 W